# EUROPEAN PATENT APPLICATION

(11) **EP 4 648 185 A1**
(43) Date of publication of application: **12.11.2025**
(21) Application number: 24175252.6
(22) Date of filing: 10.05.2024
(51) Int. Cl.: H01M 50/124, H01M 50/553

(54) **BATTERY CELL, VEHICLE AND METHOD FOR MANUFACTURING A BATTERY CELL**

(71) Applicant: Volvo Car Corporation, 405 31 Göteborg (SE)
(72) Inventor: KARLSSON, Daniel, 40531 Göteborg (SE); WALLBORG, Martin Hjälm, 40531 Göteborg (SE); PERSSON, Klas, 40531 Göteborg (SE)
(74) Representative: Maiwald GmbH

(57) **Abstract**

The disclosure relates to a battery cell (10) comprising a housing (20) having an inner wall (21), a first battery terminal (30) and a second battery terminal (40), the battery cell (10) further comprising an electrode assembly (11) with a first electrode (13) having a first current collector (14) being electrically connected to the first battery terminal (30) and a second electrode (15) having a second current collector (16) being electrically connected to the second battery terminal (40), the battery cell (10) comprising an isolating material (51) electrically isolating the first current collector (14) from the inner wall (21), the isolating material (51) being applied at least to a portion of the inner wall (21).

## Description

### TECHNICAL FIELD

The present disclosure relates to a battery cell, a vehicle, and a method for manufacturing a battery cell.

### BACKGROUND ART

Battery cells play a crucial role in various applications, particularly in powering battery electric vehicles (BEVs). These battery cells store electrical energy and are integral to the performance and efficiency of BEVs. Traditional gas engine vehicles are refueled quickly by simply pumping liquid fuel into the vehicle's tank. However, recharging BEVs involves a fundamentally different process. BEVs rely on transferring electrons (i.e., current) through wires to recharge, resulting in transfer losses due to electrical resistance in the wires. Additionally, a storage capacity of battery cells is crucial as it can act as a bottleneck, limiting the overall performance and functionality of BEVs.

This unique challenge necessitates careful consideration and selection of system parameters during the design and manufacturing of battery cells, especially to achieve fast-charging capabilities comparable to traditional gas engine vehicles. Additionally, the manufacturing process for battery cells is complex, involving multiple steps and significant investment in production equipment to meet quality, yield, and cost targets. Small process improvements such as time reduction or integration of two or more process steps into one quickly amounts to large savings, increased profitability, and throughput.

### SUMMARY

The above problems are at least partially solved or alleviated by the subject matter of the independent claims of the present disclosure, wherein further examples are incorporated in the dependent claims.

According to a first aspect, there is provided a battery cell comprising a housing having an inner wall, a first battery terminal and a second battery terminal. The battery cell further comprises an electrode assembly with a first electrode having a first current collector being electrically connected to the first battery terminal and a second electrode having a second current collector being electrically connected to the second battery terminal. The battery cell further comprises an isolating material electrically isolating the first current collector from the inner wall, the isolating material being applied at least to a portion of the inner wall.

Several battery cells that may be connected with each other may form a battery unit. Several battery cells or battery units may form the battery. The battery cell comprises a housing. The housing may mean an outer casing or container, e.g., a can that may enclose internal components of the battery cell, providing structural support and protection. The battery cell further comprises an electrode assembly. The electrode assembly comprises a first electrode and a second electrode. The electrodes may comprise materials like lithium, graphite, or metal oxides or similar. The first electrode may be a different electrode than the second electrode. One electrode may be a negative electrode, another electrode may be a positive electrode. The battery cell further comprises a first current collector and a second current collector. These may comprise one or more conductive materials. The first current collector and the second current collector may be configured for collecting and distributing electrical current generated during charge and discharge cycles. The battery cell further comprises a first battery terminal and a second battery terminal, which provide for electrically connecting the battery cell to another battery cell, e.g., in series or in parallel. The electrode assembly may further comprise an electrolyte. The electrolyte may facilitate the movement of ions between the electrodes during charge and discharge cycles, enabling the flow of electrical current. Further, a separator may be provided between the first and second electrodes, preventing direct contact and thereby a short circuit between each other while allowing ions to pass through during operation. The electrode material and the separator may be part of the electrode assembly inside the housing, which may be of a jelly roll type, for example.

An isolating material electrically isolates the first current collector from the inner wall. The isolating material may be a material used to electrically isolate components within the battery cell from one another, preventing unintended electrical connections leading to a short circuit. The isolating material is applied to the inner wall of the battery housing. This may create a physical barrier between the first current collector and the inner wall. By physically separating the first current collector from the inner wall, the isolating material may prevent any direct electrical contact between components of the battery cell and thus prevents short circuits. The isolating material may be thermally stable. Thermally stable may mean that the isolating material may withstand high temperatures, e.g., up to 80°C. Thermally stable may also mean that the isolating material may withstand low temperatures e.g. up to -50°C. That the isolation material may withstand these temperatures may mean that the isolation material substantially does not lose its electrical isolation capability when subjected to these temperatures. The isolating material may also have heat insulating properties, thereby enabling insulating battery components from heat. The isolating material may further be configured to resist thermal expansion and contraction or maintain its dimensions and structural integrity despite temperature fluctuations. Alternatively, the isolating material may have thermally conductive properties, transporting excessive heat to the housing of the battery cell. The isolating material may further provide mechanical protection to internal components of the battery cell as the electrode assembly. For example, it may absorb mechanical shocks or vibrations, reducing the risk of physical damage to the internal components of the battery cell and preserving the overall structural integrity of the battery cell.

The isolating material may be applied via a nozzle or similar. The isolating material may be dispensed, sprayed, brushed or similar on the inner wall to achieve a uniform layer onto the inner wall of the housing. The isolating material may comprise any material composition with one or more properties that make it suitable for electrical insulation within the battery cell. For example, the isolating material may comprise a dielectric material and thereby have a high electrical resistance. The isolating material may be applied to the inner wall of the housing before inserting an electrode assembly. Applying the isolating material to at least a portion of the inner wall of the housing is herein to be understood as a broad term. It may, inter alia, include coating the isolation material on at least the portion of the inner wall, depositing the isolation material on at least the portion of the inner wall, adhering the isolation material to at least the portion of the inner wall, or, in other words, an applied isolation material may be a coated, deposited or adhered isolation material, for example. Any method of application of the isolation material, in particular of one or more (thin) layers of the isolation material to the at least portion of the inner wall may be used. Applying the isolating material to the inner wall of the housing before inserting the electrode assembly may ensure unobstructed access to the inner wall of the housing. The isolating material may be applied during a coating process of the battery housing. During the manufacturing process of the battery cell, the battery housing may be coated or treated with an isolating material to provide corrosion resistance, electrical insulation, and/or mechanical protection, for example. It may be beneficial to apply the isolating material during this coating process also to the inner wall.

The housing of the battery cell may be cylindrical in shape, for example. In other words, the outer housing or casing surrounding the electrode assembly of the battery cell may have a cylindrical form. This may provide an efficient use of space, ease of manufacturing, and compatibility with various applications, such as cylindrical battery packs, for example. The electrode assembly may be of a jelly roll type. The jelly roll refers to an electrode material configuration in which electrode material and separator material are rolled together into a cylindrical shape. This rolling process may allow for efficient packaging of the electrode material and maximizing a surface area available for electrochemical reactions while maintaining a compact design.

In an example, at least a portion of the inner wall may be coated by the isolating material. The isolating material may be continuously and/or evenly spread across the surface of the inner wall, in particular with an even thickness, for example by a usage of a nozzle, to form an insulating layer, which separates the first current collector from the inner wall. Coating in this context may mean applying one or more thin layers of isolating material to the inner wall. Before applying the isolating material to the inner wall, a surface of the inner wall may be pre-treated. The pre-treatment may for example include cleaning and/or surface roughening. The pre-treatment may further include applying a primer and/or adhesion promoter to the surface to improve the bonding between the surface and the isolating material. An activation process of the surface may be performed to promote adhesion. The surface activation may be achieved through plasma treatment, corona treatment, and/or chemical surface activation.

In an example, the isolating material may be a coating cured by ultraviolet (UV) light. The isolating material may comprise one or more UV-curable coatings such as but not limited to, for example, polymers, resins, and/or any other coatings configured for electrical insulation purposes. UV curing is a process in which a photochemical reaction is initiated by exposure to ultraviolet light. This reaction causes the isolating material to polymerize and harden, forming a durable and protective layer. UV-curable coatings offer several advantages, including rapid curing times, low energy consumption, and the ability to selectively cure specific areas. Alternatively, depending on the material used as the isolating material, any other curing methods are possible, such as thermal curing, chemical curing and/or electron beam curing, for example.

In an example, the isolating material may comprise a dielectric material. A dielectric material provides high electrical resistivity. In the presence of an electric field, dielectric materials become polarized, aligning their internal dipoles in response to the applied voltage. This polarization phenomenon may allow to further reinforce the insulating properties of the isolating material. When applied as a coating to the inner wall of the housing, it may form an insulating barrier that separates the first current collector from the inner wall. By creating the insulating barrier, the dielectric material prevents unintended electrical connections or short circuits between the first current collector and the inner wall.

In an example, the isolating material may have a thickness of 0.5 mm or less. The use of an isolating material that can be applied on a surface has the advantage that it may be applied in a thin layer. In particular, the isolating material may have a thickness of 0.05 - 0.5 mm, preferably 0.1 - 0.15 mm. By applying a thin layer of the isolating material, additional space within the battery cell may be set free. This additional space may be used for increasing the amount of active material in the battery cell, such as the electrolyte for example. By increasing the amount of electrolyte, a battery cell's capacity may be improved. This may also improve the overall performance of the battery cell.

In an example, the second current collector may be configured with a variable height along a longitudinal extension of the housing and over its extension in width, which is perpendicular to the longitudinal extension of the housing. The variable height may be varied based on a temperature of the electrode assembly. The variable height of the second current collector may allow for a dynamic adjustment of the height to accommodate changes in temperature within the battery cell. For example, if the temperature increases within the battery or within the battery cell, the second current collector can adjust its height accordingly and allow the electrode assembly to expand. This way, the variable height of the current collector may improve the efficiency and performance of the battery cell under various operating conditions. The variable height of the second current collector may provide a degree of mechanical flexibility for the battery cell to withstand vibrations, shocks, and mechanical stresses, for example. By using a second current collector with a variable height, the first current collector may have a constant height along the longitudinal extension of the housing and across its width extension.

In an example, the second current collector may be at least partially designed as a spring for varying its height. By using a second current collector with a spring design, it may be possible to dynamically adjust its height based on different conditions or requirements within the battery cell. By incorporating a spring mechanism, the second current collector may adapt to changes in temperature, pressure, or other factors affecting the internal environment of the battery cell, ensuring optimal performance and efficiency. The spring mechanism may also improve a fault tolerance of the battery cell. For example, in an event of mechanical or structural failure within the battery cell, such as electrode deformation or swelling, the spring mechanism of the second current collector can accommodate these changes by adjusting its height accordingly. This may allow to maintain electrical connectivity and mitigate performance degradation.

In an example, the first current collector may be substantially flat in height along a longitudinal extension of the housing and over its extension in width, which is perpendicular to the longitudinal extension of the housing. By using the second current collector variable in height, the first current collector may have a constant height along the longitudinal extension of the housing and across its width extension or, in other words, the first current collector may be designed substantially flat in height. The substantially flat height of the first current collector may provide an increased battery cell volume that can be utilized for active material, for example. This additional space may be used for increasing the amount of active material as the electrolyte, for example. By increasing the amount of electrolyte, a battery cell's capacity may be improved. This may also improve the overall performance of the battery cell. In addition, it is possible to reduce the amount of material used within the battery cell and thus lower the costs and weight of the battery cell, for example. Further, the substantially flat profile of the first current collector may help to optimize an arrangement of components inside the battery cell for example. The first current collector may have a maximum height of 3 mm or less in its extension in height or along the longitudinal extension of the housing.

In an example, the first current collector may be laser welded to the first electrode and/or the second current collector may be laser-welded to the second electrode. Laser welding may be used to establish precise connections between a current collector and an electrode. This may provide a low-resistance connection between a current collector and an electrode and thus ensure efficient electrical conductivity within the battery cell. This way, laser welding may minimize electrical losses and ensure efficient energy transfer within the battery cell. Thus, reducing internal resistance through improved electrical connections by laser welding may lead to several benefits, including faster charging times, increased energy efficiency. This may further lower costs associated with cooling systems needed to manage heat generated during charging.

In an example, the isolating material may be applied to the inner wall adjacent to the first electrode. By applying the isolating material adjacent to the first electrode, areas where electrical contact could occur between the first electrode and the inner wall may be effectively insulated. By applying the isolating material adjacent to the first electrode, a need for additional materials to isolate the first electrode from the inner wall may be reduced or they may be completely omitted. The isolating material may in particular be directly adjacent to the first electrode. It may be provided in a way that no further structure or material or at least no electrically isolating structure or material, optionally at least except for the electrolyte, is located in between the isolating material and the first electrode. For example, additional isolating plastic pieces as conventionally used may be omitted. This may reduce the process steps during the manufacturing process of the battery cell. Further, the isolating material may be applied in thin layers, resulting in additional space or volume within the battery cell. This additional space may be used for increasing the amount of active material as the electrolyte for example, enhancing the overall capacity of the battery cell.

In an example, the applied isolating material may substantially extend from the first battery terminal to the second current collector. By extending the isolating material from the first battery terminal to the second current collector the isolating material may provide protection against degradation and diffusion of material of the battery cell or the housing for example into the electrolyte, as well as corrosion. Additionally, applying the isolating material from the first battery terminal to the second current collector may provide electrical insulation from the first battery terminal to the second current collector. Thus, by extending the isolating material from the first battery terminal to the second current collector, potential areas of electrical contact or short circuits between different components of the battery cell are minimized. During a conventional manufacturing process of the battery cell or at the end of this manufacturing process, the battery cell may be further wrapped in one or several outer layers of a separator material. By applying the isolating material from the first battery terminal to the second current collector, the isolating material may replace the outer layers of the separator material, resulting in additional space within the battery cell. Thus, additional layers of separator material may be omitted, and the additional free space may be used for increasing the amount of active material such as the electrolyte for example, increasing an overall capacity of the battery cell. Additionally, substituting the separator material on the outer layer of the electrode assembly with the isolating material on the inner wall may further reduce the process steps during the manufacturing process of the battery cell. By applying the isolating material from the first battery terminal to the second current collector it may be meant that the isolating material may extent up to the part, or just before the part, of the housing where the second current collector comes in contact with the housing of the battery cell. This may ensure that the second current collector is in metallic contact with the housing of the battery cell.

In an example, the isolating material may comprise acrylic material. Acrylic material, in particular an acrylic-based coating, may also be used to coat the exterior of the battery housing. Acrylic material may offer several advantageous properties for use as an isolating material, such as dielectric properties, chemical resistance, thermal stability, mechanical strength and/or ease of application, for example. For example, by using acrylic material as an isolating material, electrical insulation between different components of the battery cell may be provided, preventing for short circuits, for example. Additionally, acrylic material may provide protection against degradation and/or corrosion.

According to a second aspect, there is provided a vehicle comprising a battery unit, the battery unit having multiple battery cells according to the first aspect of this disclosure. The vehicle may be of any type, such as a hybrid electric vehicle or a battery electric vehicle, for example. The battery unit may be of any type, such as a traction battery unit, for example.

According to a third aspect of this disclosure, there is provided a method for manufacturing a battery cell, the method comprising:
- providing a housing having an inner wall, a first battery terminal and a second battery terminal,
- applying an isolating material to the inner wall, and
- inserting an electrode assembly with a first electrode having a first current collector and a second electrode having a second current collector into the housing such that the isolating material electrically isolates the first current collector from the inner wall.

In an example, the method may comprise further steps such as illuminating the isolating material applied to the inner wall with ultraviolet light, thereby curing the isolating material.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a cross-sectional view of a battery cell according to the prior art;
- Figure 2: shows a cross-sectional view of a battery cell according to this disclosure;
- Figures 3A - 3B: show cross-sectional views of a battery cell according to this disclosure, the battery cell include a second current collector variable in height;
- Figure 4: shows a schematic illustration of a vehicle comprising a battery unit with multiple battery cells according to this disclosure; and
- Figure 5: shows a schematic illustration of a method for manufacturing the battery cell of Fig. 2.

### DETAILED DESCRIPTION

The Figures are merely schematic representations and serve only to illustrate examples of the disclosure. Identical or equivalent elements are in principle provided with the same reference signs.

The designation of elements and steps as first, second, etc. as provided herein is merely intended to make the elements and steps referenceable and distinguishable from one another. By no means does the designation of elements and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of elements or steps in a certain order is merely intended to facilitate one example of this disclosure and by no means constitutes a limitation of the scope of this disclosure. Generally, unless no explicitly required order is being mentioned, the steps may be carried out in any feasible order.

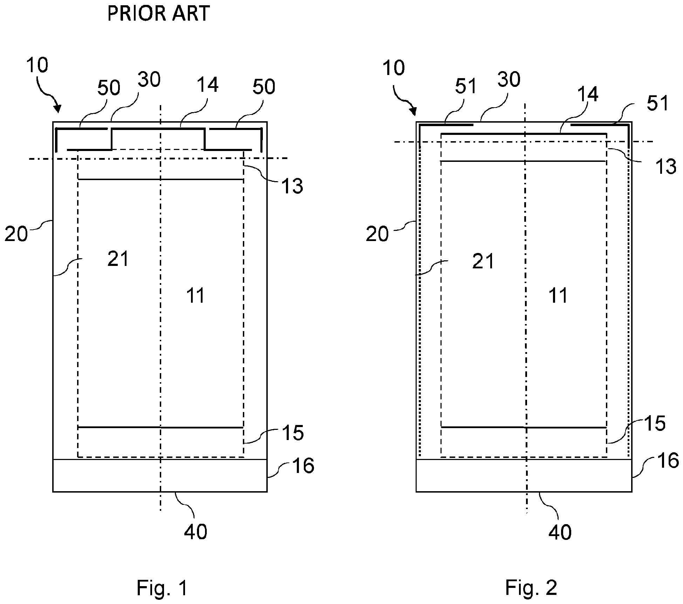

Figure 1 shows a battery cell 10 according to the prior art and as a cross-sectional view through the battery cell 10. The battery cell 10 comprises a housing 20, which is of a cylindrical type in this example. The housing 20 comprises an inner wall 21, a first battery terminal 30 and a second battery terminal 40 opposite the first battery terminal 30.

The battery cell 10 further comprises an electrode assembly 11. The electrode assembly 11 comprises a first electrode 13 having a first current collector 14 which is electrically connected to the first battery terminal 30 and a second electrode 15 having a second current collector 16 which is electrically connected to the second battery terminal 40. To prevent the first current collector 14 from coming into contact with the inner wall 21 of the battery housing 20, conventionally an isolating piece 50, typically made from a plastic material, is inserted into the housing 20. This isolating piece 50 is usually 0.5 mm thick and needs to be inserted in an additional manufacturing step during the manufacturing of the battery cell 10.

To reduce the manufacturing steps required to manufacture a battery cell 10 of high electrical conductivity for better charging performance and increased cell volume, the battery cell 10 as shown in Figure 2 is proposed. The battery cell 10 may be designed with some or all features described with reference to Fig. 1, for example, but in particular without the isolating piece 50.

The battery cell 10 of Fig. 2 distinguishes at least from that of Fig. 1 in that the battery cell 10 comprises an isolating material 51 being applied to a portion of the inner wall 21. The isolating material 51 may for example be applied to the inner wall 21 adjacent to the first electrode 14 to isolate the first current collector 14 from the inner wall 21. This way, unintended electrical connections, in particular short circuits, may be prevented.

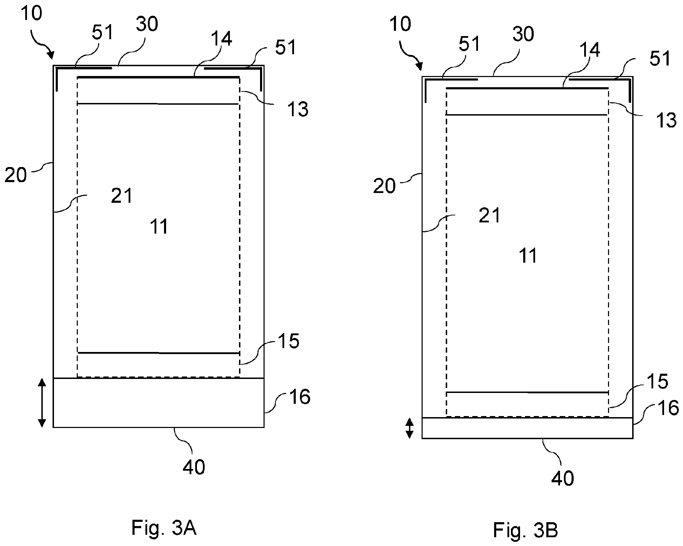

The battery cell 10 further comprises a second current collector 16 that may be configured with a variable height along a longitudinal extension of the housing 20 and over its extension in width, which is perpendicular to the longitudinal extension of the housing 20 (as shown in Figs. 3A and 3B). The variable height of the second current collector 16 may allow for a dynamic adjustment of the height to accommodate changes in temperature within the battery cell 10, for example, as well as protect the battery cell 10 from mechanical stress such as vibrations or similar. By using the second current collector 16 variable in height, the first current collector 14 may be designed substantially flat in height along a longitudinal extension of the housing 21 and over its extension in width, which is perpendicular to the longitudinal extension of the housing 21. The substantially flat height of the first current collector 14 may provide an increased volume of the battery cell 10 that can be utilized to increase the amount of active material as the electrolyte for example.

Applying the isolating material 51 may not be restricted to the inner wall 21 adjacent to the first electrode 14. The applied isolating material 51 may substantially extend from the first battery terminal 30 to the second current collector 16 (indicated by dotted line). By extending the isolating material 51 from the first battery terminal 30 to the second current collector 16, the isolating material 51 may provide protection against degradation and diffusion of material of the battery cell 10 into the electrolyte, as well as corrosion. Additionally, by applying the isolating material 51 from the first battery terminal 30 to the second current collector 16, additional outer layers of a separator material may be omitted during manufacturing of the battery cell 10.

Figures 3A and 3B show the battery cell 10 of Fig. 2 including the second current collector 16 that is variable in height. Figure 3A illustrates a first exemplary scenario in which the second current collector 16 may allow for a dynamic adjustment of its height to accommodate changes in temperature within the battery cell 10. In this scenario, a temperature within the battery cell 10 is decreased due to, for example, outer climate conditions. This may be due to that a vehicle 1 comprising the battery cell 10 is being exposed to cold conditions, e.g., temperatures below 0 °C. Due to the exposure to cold conditions, the electrode assembly 11 may contract. This contraction exerts a force or a tension within the battery cell 10. Because the second current collector 16 in this example is variable in height, it can extend in longitudinal direction and thus compensate the contraction force. In another example, as shown in Fig. 3B, the battery cell 10 of the vehicle 1 may be exposed to increased temperatures, for example due to exposure to hot climate conditions, e.g., temperatures above 30 °C or similar and/or due to high utilization conditions of the battery unit 2 or similar. In this scenario, the increased temperature of the battery cell 10 leads to expansion of the electrode assembly 11, which exerts a force or a pressure within the battery cell 10. Because the second current collector 16 is variable in height, it can be compressed and thus compensate the pressure within the battery cell 10. These examples of extending or compressing of the second current collector 16 in Figs. 3A and 3B are only for illustrative purposes. All intermediate positions of the second current collector 16 according to the climatic or operational conditions are possible. The second current collector 16 may be further at least partially designed as a spring for varying its height.

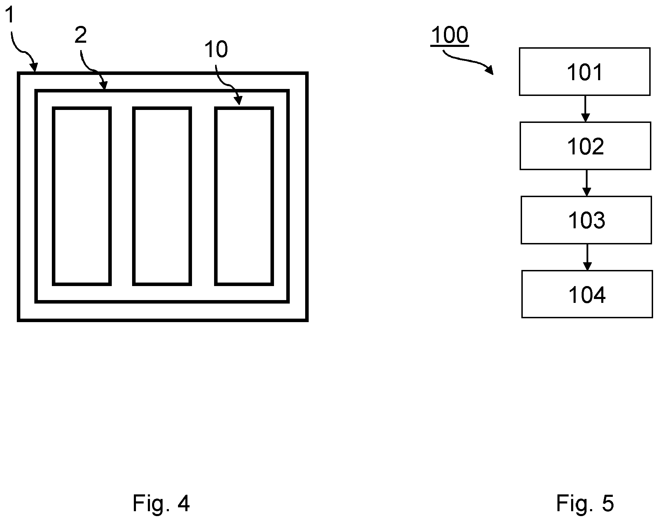

Figure 4 shows a vehicle 1 comprising the battery unit 2 having three battery cells 10 according to this disclosure.

Figure 5 depicts steps of a method 100 for manufacturing a battery cell 10 as shown in Figure 2 or Figs. 3A and 3B. In a first step 101, a housing 20 having an inner wall 21, a first battery terminal 30 and a second battery terminal 40 is provided. In a second step 102, an isolating material 51 is applied to the inner wall 21. The isolating material 51 may be applied via a spraying nozzle or similar, for example. In a third step 103, an electrode assembly 11 with a first electrode 13 having a first current collector 14 and a second electrode 15 having a second current collector 16 is inserted into the housing 20 such that the isolating material 51 electrically isolates the first current collector 14 from the inner wall 21. The first electrode 13 having the first current collector 14 may be electrically connected to the first battery terminal 30, and the second electrode 15 having a second current collector 16 may be electrically connected to the second battery terminal 40.

In an additional step 104 the isolating material 51 applied to the inner wall 21 may be illuminated with ultraviolet light, thereby curing the isolating material 51.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: vehicle
- 2: battery unit
- 10: battery cell
- 11: electrode assembly
- 13: first electrode
- 14: first current collector
- 15: second electrode
- 16: second current collector
- 20: housing
- 21: inner wall
- 30: first battery terminal
- 40: second battery terminal
- 50: isolating piece
- 51: isolating material
- 100: method
- 101: first step
- 102: second step
- 103: third step
- 104: fourth step

## Claims

1. A battery cell (10) comprising a housing (20) having an inner wall (21), a first battery terminal (30) and a second battery terminal (40), the battery cell (10) further comprising an electrode assembly (11) with a first electrode (13) having a first current collector (14) being electrically connected to the first terminal (30) and a second electrode (15) having a second current collector (16) being electrically connected to the second terminal (40), the battery cell (10) comprising an isolating material (51) electrically isolating the first current collector (14) from the inner wall (21), the isolating material (51) being applied at least to a portion of the inner wall (21).

2. The battery cell (10) according to claim 1, wherein at least a portion of the inner wall (21) is coated by the isolating material (51).

3. The battery cell (10) according to claim 1 or 2, wherein the isolating material (51) is a coating cured by ultraviolet light.

4. The battery cell (10) according to any of the previous claims, wherein the isolating material (51) comprises a dielectric material.

5. The battery cell (10) according to any of the previous claims, wherein the isolating material (51) has a thickness of 0.5 mm or less.

6. The battery cell (10) according to any one of the previous claims, wherein the second current collector (16) is configured with a variable height along a longitudinal extension of the housing (20) and over its extension in width, which is perpendicular to the longitudinal extension of the housing (20), the variable height varying based on a temperature of the electrode assembly (11).

7. The battery cell (10) according to claim 6, wherein the second current collector (16) is at least partially designed as a spring for varying its height.

8. The battery cell (10) according to claim 6 or 7, wherein the first current collector (14) is substantially flat in height along a longitudinal extension of the housing (20) and over its extension in width, which is perpendicular to the longitudinal extension of the housing (20).

9. The battery cell (10) according to any of the previous claims, wherein the first current collector (14) is laser welded to the first electrode (13) and/or the second current collector (16) is laser welded to the second electrode (15).

10. The battery cell (10) according to any of the previous claims, wherein the isolating material (51) is applied to the inner wall (21) adjacent to the first electrode (13).

11. The battery cell (10) according to any of the previous claims, wherein the applied isolating material (51) substantially extends from the first battery terminal (30) to the second current collector (16).

12. The battery cell (10) according to any of the previous claims, wherein the isolating material (51) comprises acrylic material.

13. A vehicle (1) comprising a battery unit (2), the battery unit (2) having multiple battery cells (10) according to any of the previous claims.

14. A method (100) for manufacturing a battery cell (10), the method (100) comprising:
- (101) providing a housing (20) having an inner wall (21), a first battery terminal (30) and a second battery terminal (40),
- (102) applying an isolating material (51) to the inner wall (21), and
- (103) inserting an electrode assembly (11) with a first electrode (13) having a first current collector (14) and a second electrode (15) having a second current collector (16) into the housing (20) such that the isolating material (51) electrically isolates the first current collector (14) from the inner wall (21).

15. The method (100) according to claim 14, the method (100) further comprising:
- (104) illuminating the isolating material (51) applied to the inner wall (21) with ultraviolet light, thereby curing the isolating material (51).

## Amended claims

### Amended claims in accordance with Rule 137(2) EPC.

1. A battery cell (10) comprising a housing (20) having an inner wall (21), a first battery terminal (30) and a second battery terminal (40), the battery cell (10) further comprising an electrode assembly (11) with a first electrode (13) having a first current collector (14) being electrically connected to the first terminal (30) and a second electrode (15) having a second current collector (16) being electrically connected to the second terminal (40), the battery cell (10) comprising an isolating material (51) electrically isolating the first current collector (14) from the inner wall (21), the isolating material (51) being applied at least to a portion of the inner wall (21), wherein the isolating material (51) is a coating cured by ultraviolet light.

2. The battery cell (10) according to claim 1, wherein at least a portion of the inner wall (21) is coated by the isolating material (51).

3. The battery cell (10) according to claim 1 or 2, wherein the isolating material (51) comprises a dielectric material.

4. The battery cell (10) according to any of the previous claims, wherein the isolating material (51) has a thickness of 0.5 mm or less.

5. The battery cell (10) according to any one of the previous claims, wherein the second current collector (16) is configured with a variable height along a longitudinal extension of the housing (20) and over its extension in width, which is perpendicular to the longitudinal extension of the housing (20), the variable height varying based on a temperature of the electrode assembly (11).

6. The battery cell (10) according to claim 5, wherein the second current collector (16) is at least partially designed as a spring for varying its height.

7. The battery cell (10) according to claim 5 or 6, wherein the first current collector (14) is substantially flat in height along a longitudinal extension of the housing (20) and over its extension in width, which is perpendicular to the longitudinal extension of the housing (20).

8. The battery cell (10) according to any of the previous claims, wherein the first current collector (14) is laser welded to the first electrode (13) and/or the second current collector (16) is laser welded to the second electrode (15).

9. The battery cell (10) according to any of the previous claims, wherein the isolating material (51) is applied to the inner wall (21) adjacent to the first electrode (13).

10. The battery cell (10) according to any of the previous claims, wherein the applied isolating material (51) substantially extends from the first battery terminal (30) to the second current collector (16).

11. The battery cell (10) according to any of the previous claims, wherein the isolating material (51) comprises acrylic material.

12. A vehicle (1) comprising a battery unit (2), the battery unit (2) having multiple battery cells (10) according to any of the previous claims.

13. A method (100) for manufacturing a battery cell (10), the method (100) comprising:
- (101) providing a housing (20) having an inner wall (21), a first battery terminal (30) and a second battery terminal (40),
- (102) applying an isolating material (51) to the inner wall (21),
- (103) inserting an electrode assembly (11) with a first electrode (13) having a first current collector (14) and a second electrode (15) having a second current collector (16) into the housing (20) such that the isolating material (51) electrically isolates the first current collector (14) from the inner wall (21), and
- (104) illuminating the isolating material (51) applied to the inner wall (21) with ultraviolet light, thereby curing the isolating material (51).
